# EUROPÄISCHE PATENTSCHRIFT

(11) **EP 2 219 155 B1**
(45) Veröffentlichungstag und Bekanntmachung des Hinweises auf die Patenterteilung: **24.04.2013**
(21) Anmeldenummer: 09179171.5
(22) Anmeldetag: 15.12.2009
(51) Int. Cl.: G06T 7/00, G06T 7/20

(54) **Vorrichtung, Verfahren und Computerprogramm zur Segmentierung eines Objektes in einem Bild, und Videoüberwachungssystem**
Apparatus, method and computer programme for segmenting an object in an image, and video surveillance system
Appareil, procédé et programme d'ordinateur pour segmentation d'un objet dans une image, et système de vidéosurveillance

(30) Priorität: 12.02.2009 DE 102009000810
(43) Veröffentlichungstag der Anmeldung: 18.08.2010
(73) Patentinhaber: Robert Bosch GmbH, 70442 Stuttgart (DE)
(72) Erfinder: Yu, Jie, 31139 Hildesheim (DE); Ebling, Julia, 31139 Hildesheim (DE); Loos, Hartmut, 31141 Hildesheim (DE)

(56) Entgegenhaltungen:
- EP-A1- 1 544 795
- US-A1- 2006 056 694
- REGENSBURGER U ET AL: "Visual recognition of obstacles on roads", INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, Bd. 2, 12. September 1994 (1994-09-12), Seiten 980-987, XP010141904, DOI: 10.1109/IROS.1994.407483 ISBN: 978-0-7803-1933-2
- GRAEFE V: "ECHTZEIT-BILDVERARBEITUNG FUR EIN FAHRER-UNTERSTUTZUNGSSYSTEM ZUM ENSATZ AUF AUTOBAHNEN", IT + TI INFORMATIONSTECHNIK UND TECHNISCHE INFORMATIK, OLDENBOURG VERLAG. MUNCHEN, DE, Bd. 36, Nr. 1, 1. Februar 1994 (1994-02-01), Seiten 16-24, XP000435494, ISSN: 0944-2774

## Beschreibung

### Stand der Technik

Die Erfindung betrifft eine Vorrichtung zur Segmentierung eines Objektes in einem Bild, wobei in dem Bild ein Überwachungsbereich mit einem oder mehreren Objekten dargestellt und/oder darstellbar ist, mit einem Schätzmodul, welches ausgebildet ist, von einem möglichen Objektpixel des Objekts in dem Bild eine Distanz in dem Überwachungsbereich abzuschätzen, und mit einem Segmentierungsmodul, welches ausgebildet ist, gemäß einer Segmentierungsstrategie das Objekt zu segmentieren, welches das Objektpixel umfasst. Die Erfindung betrifft auch ein Videoüberwachungssystem, ein Verfahren zur Segmentierung eines Objektes in einem Bild und ein Computerprogramm.

Videoüberwachungssysteme werden heute oftmals zur Überwachung von öffentlichen Plätzen bzw. Gebäuden oder gewerblichen Einrichtungen eingesetzt und umfassen eine oder mehrere Überwachungskameras, welche auf relevante Regionen eines Überwachungsbereiches gerichtet sind. Die von den Überwachungskameras erzeugten Bilddatenströme werden üblicherweise zu einer Überwachungszentrale geführt, wo sie z.B. unmittelbar durch Überwachungspersonal geprüft werden können.

Um die Überwachungsqualität zu erhöhen, werden Bildverarbeitungsalgorithmen zur automatisierten Auswertung der Bilddatenströme eingesetzt. Dabei werden bei manchen Anwendungen bewegte Objekte in dem Überwachungsbereich vom (im Wesentlichen statischen) Hintergrund getrennt, über die Zeit verfolgt und bei relevanten Bewegungen Alarm ausgelöst. Die Bildverarbeitungsalgorithmen beruhen oftmals darauf, die Bildunterschiede zwischen einem aktuellen Kamerabild und einem sogenannten Szenenreferenzbild, welches den statischen Szenenhintergrund modelliert, auszuwerten. Mit dieser Methode erhält man, ausgehend von dem aktuellen Kamerabild, eine Vielzahl von Differenzpixeln, welche in einem nachfolgenden Schritt zu einem Objekt segmentiert werden, welches dann weiter verarbeitet, z.B. in weiteren Bildern verfolgt werden kann.

Der wissenschaftliche Artikel von Regensburger et al.: "Visual recognition of obstacles on roads", Intelligent Robots and Systems '94. 'Advanced robotic systems and the real world', IROS '94. Proceedings of the IEEE/RSJ/GI International Conference in Munich, Germany 12 - 16 Sept. 1994, New York, NY, USA, USA, IEEE, Bd. 2, 12 September 1994 (1994-09-12), Seiten 980-987, ISBN: 978-0-7803-1933-2 betrifft ein Verfahren zur optischen Erkennung von Hindernissen auf einer Fahrbahn. Bei dem Verfahren werden einzelne Objekte auf der Fahrbahn mittels Objektdetektion erkannt und klassifiziert, um auf diese Weise unterscheiden zu können, ob es sich bei den Objekten um Hindernisse handelt. In dem Artikel wird festgestellt, dass sich die Kriterien für die Erkennung von Objekten sehr stark mit der Entfernung zu dem Objekt ändern. So wird unter dem Abschnitt 4 eine Unterteilung zwischen nahen Objekten und entfernten Objekten getroffen und darauf verwiesen, dass unterschiedliche generische Objektmodelle zur Detektion verwendet werden.

Die Druckschrift DE 199 326 62 A1 betrifft ein Verfahren zur Erkennung von Szenenänderungen sowie eine Überwachungseinrichtung hierzu. In dieser Druckschrift wird ein Verfahren zur Erkennung von Änderungen in einem durch eine stationär angeordnete Bildaufnahmeeinheit beobachteten Blickbereich vorgeschlagen, bei dem Kantenbilder berechnet werden und mit Kantenbildern von Referenzaufnahmen verglichen werden, um bildhelligkeitsunabhängig statische Veränderungen innerhalb des beobachteten Gebietbereichs zu erkennen.

### Offenbarung der Erfindung

Im Rahmen der Erfindung wird eine Vorrichtung zur Segmentierung eines Objektes in einem Bild mit den Merkmalen des Anspruches 1, ein Videoüberwachungssystem mit den Merkmalen des Anspruchs 10, ein Verfahren zur Segmentierung eines Objektes mit den Merkmalen des Anspruches 11 und ein Computerprogramm mit den Merkmalen des Anspruches 12 vorgeschlagen. Bevorzugte oder vorteilhafte Ausführungsformen der Erfindung ergeben sich aus den Unteransprüchen, der nachfolgenden Beschreibung sowie den beigefügten Figuren.

Es wird eine Vorrichtung zur Segmentierung eines Objektes in einem Bild, insbesondere in einem Videobild, vorgestellt, wobei in dem Bild ein insbesondere realer Überwachungsbereich mit einem oder mehreren Objekten dargestellt und/oder darstellbar ist. Das Bild stammt vorzugsweise von einer Überwachungskamera, welche auf den Überwachungsbereich bzw. eine Region in dem Überwachungsbereich gerichtet und/oder richtbar ist. Das Bild kann auch Teil einer Videosequenz sein.

Unter der Segmentierung wird vorzugsweise das Zusammenfassen von insbesondere benachbarten und/oder naheliegenden Pixel, also Pixel mit einem Pixelabstand kleiner als 10, vorzugsweise kleiner als 5 Pixel zu einer insbesondere inhaltlich zusammenhängenden Region verstanden, wobei die Region eines der Objekte in dem Überwachungsbereich repräsentiert.

Bei einer möglichen Ausführungsform werden Pixel, insbesondere Differenzpixel, welche im Rahmen einer Vorverarbeitung, bei der die Unterschiede zwischen einem aktuellen Bild und einem Referenzbild, insbesondere einem Szenenreferenzbild, als relevant erkannt wurden, zu einem oder mehreren Objekten segmentiert.

Die Vorrichtung umfasst ein Schätzmodul, welches ausgebildet ist, von einem möglichen Objektpixel des Objektes in dem Bild eine reale Distanz in dem Überwachungsbereich abzuschätzen. Das mögliche Objektpixel kann durch vorgebbare Regeln selektiert sein, insbesondere ist das Objektpixel eines der zuvor beschriebenen relevanten Pixel oder Differenzpixel.

Ferner umfasst die Vorrichtung ein Segmentierungsmodul, welches gemäß einer Segmentierungsstrategie das Objekt segmentiert, wobei das Objekt das Objektpixel umfasst, zu dem zuvor eine Distanz abgeschätzt wurde. Die Segmentierungsstrategie betrifft Regeln hinsichtlich des Verfahrens der Segmentierung.

Erfindungsgemäß wird ein Strategiemodul vorgeschlagen, welches programmtechnisch und/oder schaltungstechnisch ausgebildet ist, die Segmentierungsstrategie für das Objekt in Abhängigkeit zu der geschätzten Distanz des Objektpixels anzupassen.

Über ein Szenenwissen wird zunächst die Distanz des Objektpixels und in manchen Ausführungsformen danach die Distanz des Objektes, also zum Beispiel der Abstand zwischen der das Bild aufnehmenden Kamera und dem Objekt, abgeschätzt, wobei unter Berücksichtigung der abgeschätzten Distanz die Segmentierungsstrategie eingestellt wird. Der Vorteil der Erfindung ist unter anderem darin zu sehen, dass ein Szenenwissen unterstützend bei der Segmentierung der Objekte in dem Bild verwendet wird, so dass in die Bildverarbeitung Zusatzwissen einfließt. Im Ergebnis kann dadurch die Segmentierung robuster und mit besseren Ergebnissen durchgeführt werden.

Bei einer bevorzugten Ausführungsform der Erfindung kann das Strategiemodul auf mindestens zwei unterschiedliche Segmentierungsstrategien zugreifen. Die Segmentierungsstrategien können sich dabei hinsichtlich der Auswahl oder der Mischung bzw. Gewichtung von Segmentierungsverfahren unterscheiden. So kann beispielsweise eine beliebige Auswahl von pixelorientierten, kantenorientierten, regionenorientierten, modellbasierten, texturbasierten und/oder farborientierten Verfahren ausgewählt werden. Bei den pixelorientierten Verfahren werden Kriterien zur Objektzuordnung nur auf das aktuelle Pixel bezogen. Bei den kantenorientierten Verfahren wird nach Kanten und/oder Konturen gesucht, die zu Objektgrenzen zusammengefasst werden. Bei regionenorientierten Verfahren werden zusammenhängende Punktmengen als Gesamtheit betrachtet. Bei den modellbasierten Verfahren wird konkretes Wissen über die Objekte zugrunde gelegt. Bei den texturorientierten Verfahren wird nach einer Textur, insbesondere einer homogenen oder inhomogenen inneren Struktur des Objektes, anstatt nach einer einheitlichen Farbe segmentiert. Auch möglich sind farborientierte Verfahren, die ein Objekt nach der Farbzugehörigkeit segmentieren. Beispielsweise ist es auch möglich, dass die Segmentierungsstrategien sich durch die Verwendung einer Schattenerkennung unterscheiden.

Alternativ oder ergänzend können sich die Segmentierungsstrategien durch die Parametrisierung der unterschiedlichen Verfahren unterscheiden, so können beispielsweise unterschiedliche Grenzwerte etc. eingesetzt werden.

Bei einer einfachen Ausführungsform der Erfindung umfasst das Strategiemodul wenigstens eine erste Segmentierungsstrategie, welche auf Nahobjekte angewandt wird und eine zweite Segmentierungsstrategie, welche auf Fernobjekte angewandt wird. Die geschätzte Distanz des Objektpixels eines Nahobjektes ist dabei geringer als die geschätzte Distanz des Objektpixels eines Fernobjektes.

Bei einer möglichen Ausführungsform der Erfindung ist das Schätzmodul zur Abschätzung der Distanz in Abhängigkeit der Position des Objektpixels in dem Bild ausgebildet. Bei dieser Ausführungsform wird ausgenutzt, dass - beispielsweise wenn eine ebene Fläche wie ein Parkplatz überwacht wird - Pixel in den unteren Bildregionen zu Objekten mit einer geringeren Distanz gehören als Pixel aus den oberen Bildregionen, da angenommen wird, dass sich alle Objekte auf der ebenen Fläche bewegen. Besonders bevorzugt ist daher, dass das Objektpixel ein Fußpixel des Objektes ist, also ein Pixel am unteren Randbereich des Objektes, da dieser Randbereich die Kontaktzone mit dem Untergrund repräsentiert. Es ist vorstellbar, dass bei einer Umsetzung der Erfindung zunächst die unteren Bildregionen zeilenweise auf relevante Pixel untersucht werden, welche dann als Objektpixel weiterverarbeitet werden.

Bei anderen möglichen Ausführungsformen der Erfindung kann die Kamera zur Erzeugung des Bildes kalibriert sein, wobei aus der Kalibrierung bekannt ist, wie weit das reale Objekt eines Objektpixels von der Kamera entfernt ist, so dass eine Distanz unmittelbar auslesbar ist.

Bei einer Weiterbildung der Erfindung ist vorgesehen, dass das Segmentierungsmodul ausgebildet ist, ausgehend von dem Objektpixel benachbarte und/oder naheliegende, insbesondere unmittelbar benachbarte Pixel, auf die Zugehörigkeit zu dem gleichen Objekt gemäß der Segmentierungsstrategie zu prüfen. Diese Vorgehensweise ist in der Literatur auch als "region growing" bekannt. Das Objektpixel bildet einen Keim als Startregion, wobei benachbarte Pixel zu dem Objekt hinzugefügt werden, wenn die Regeln gemäß der Segmentierungsstrategie erfüllt sind.

Bei einer vorteilhaften Weiterbildung der Erfindung kann das Segmentierungsmodul so ausgebildet sein, dass in einem Nachfolgeschritt nach einer ersten oder einer erfolgten Segmentierung des Objektes das segmentierte Objekt in Bezug auf die Distanz überprüft wird. Beispielsweise wird in Abhängigkeit von der Größe und anderen Eigenschaften des segmentierten Objekts noch einmal Distanz bestimmt, um auf Basis der neuen Distanz die Segmentierung zu verfeinern. Optional kann die Überprüfung mehrfach erfolgen. In der nachfolgenden Segmentierung wird dann jeweils die Segmentierungsstrategie angewandt, welche auf die aktualisierte Distanz angepasst ist. Der Vorteil dieser Iteration liegt darin, dass falsche Entfernungsschätzungen, die zum Beispiel durch Objekte auf einer Leiter, springende - fliegende Objekte oder ähnliches entstehen, nachkorrigiert werden können und somit das Segmentierungsergebnis verbessert werden kann.

Ein weiterer Gegenstand der Erfindung betrifft ein Videoüberwachungssystem mit einer oder mehreren Überwachungskameras, welche in dem Überwachungsbereich auf Regionen gerichtet und/oder richtbar sind, in denen sich bewegte Objekte aufhalten können, wobei das Videoüberwachungssystem eine Vorrichtung, wie sie zuvor beschrieben wurde, bzw. nach einem der vorhergehenden Ansprüche aufweist. Der weitere Gegenstand betrifft die Integration der erfindungsgemäßen Vorrichtung in ein Videoüberwachungssystem, welches vorzugsweise zur Detektion, Überwachung und/oder Verfolgung von bewegten Objekten in dem Überwachungsbereich ausgebildet ist. Beispielsweise werden derartige Videoüberwachungssysteme - wie eingangs erwähnt - zur Überwachung von öffentlichen Plätzen bzw. Gebäuden, gewerblichen Anlagen oder auch anderen Einrichtungen, wie zum Beispiel Bibliotheken, Schulen, Universitäten, Gefängnisse etc. eingesetzt.

Ein weiterer Gegenstand der Erfindung betrifft ein Verfahren zur Segmentierung eines Objekts, welches vorzugsweise auf der soeben beschriebenen Vorrichtung und/oder auf dem Videoüberwachungssystem durchgeführt wird mit den Merkmalen des Anspruchs 11 und ein Computerprogramm mit den Merkmalen des Anspruches 12.

Weitere Merkmale, Vorteile und Wirkungen der Erfindung ergeben sich aus der nachfolgenden Beschreibung eines bevorzugten Ausführungsbeispiels der Erfindung und den beigefügten Figuren. Dabei zeigen:
- Figur 1: ein Blockdiagramm eines Videoüberwachungssystems als ein Ausführungsbeispiel der Erfindung;
- Figuren 2 a-d: Zwischenergebnisse der Verarbeitung eines Bildes des Videoüberwachungssystems zur Illustration des erfindungsgemäßen Verfahrens.

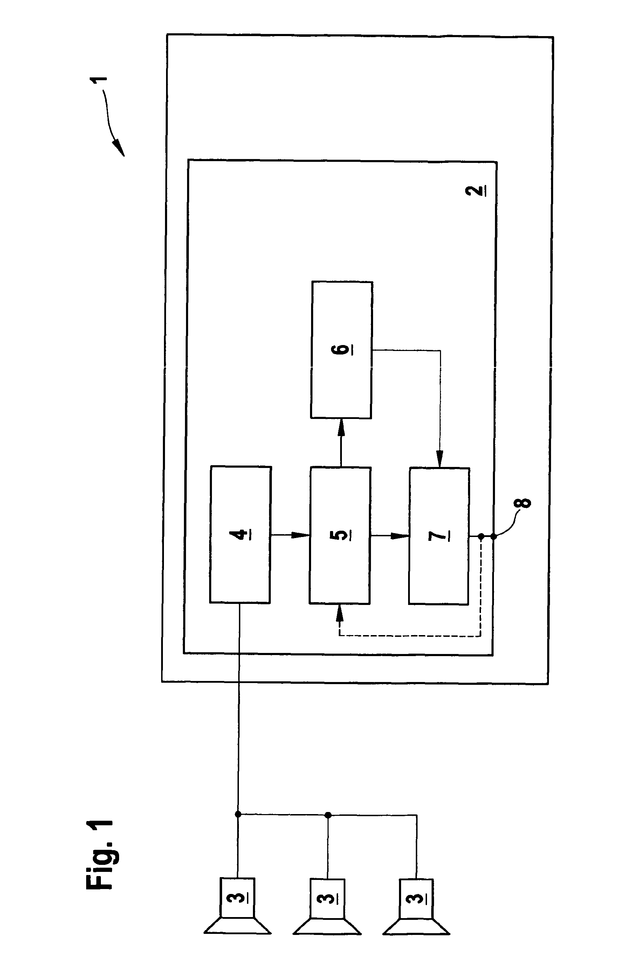

Die Figur 1 zeigt in einer schematischen Blockdarstellung ein Videoüberwachungssystem 1, welches neben optionalen, weiteren Komponenten, die nicht dargestellt sind, eine Segmentierungsvorrichtung 2 umfasst. Das Videoüberwachungssystem 1 ist mit einer oder mehreren Überwachungskameras 3 verbunden, welche auf einen Überwachungsbereich gerichtet sind, in dem sich bewegte Objekte aufhalten können. Das Videoüberwachungssystem 1 wird beispielsweise zur Straßenüberwachung eingesetzt und dient allgemein zur Detektion, Erkennung und/oder Verfolgung von bewegten Objekten. Die bewegten Objekte sind beispielsweise als Personen oder Fahrzeuge ausgebildet.

Ausgehend von den Überwachungskameras 3 werden aktuelle Videobilder des Überwachungsbereichs an das Videoüberwachungssystem 1 übergeben. In einem Suchmodul 4 werden in einem ersten Schritt relevante Pixel in einem der Videobilder bestimmt, welche zu einem bewegten Objekt gehören (können). Beispielsweise wird hierfür das aktuelle Videobild von einem Szenenreferenzbild, welches die statischen oder quasi statischen Objekte bzw. Bereiche in dem Überwachungsbereich zeigt, abgezogen, und nachfolgend die verbleibenden Pixel über einem vorgebbaren Grenzwert als relevante Pixel interpretiert. Die relevanten Pixel entsprechen den Bildänderungen zwischen dem aktuellen Videobild und dem Szenenreferenzbild. Alternativ können andere Verfahren zur Ermittlung der relevanten Pixel herangezogen werden.

In einem Schätzmodul 5 wird für mindestens einen der relevanten Pixel, welcher nachfolgend als Objektpixel eines Objektes bezeichnet wird, eine reale Distanz in dem Überwachungsbereich abgeschätzt. Die Distanz kann beispielsweise auf die Position der das Videobild aufnehmenden Überwachungskamera 3 oder auf eine andere Referenzposition bezogen sein.

Der Wert der geschätzten Distanz wird an ein Strategiemodul 6 übergeben, welches in Abhängigkeit zu dem Wert der geschätzten Distanz eine Segmentierungsstrategie für das zu dem Objektpixel gehörende Objekt bereit stellt und/oder anpasst. Beispielsweise kann eine Segmentierungsstrategie für ein Objekt, welches sich in einem Nahbereich der Überwachungskamera 3 befindet, die nachfolgenden Kriterien nutzen:
- Texturinformation des Objekts und/oder
- Ausfüllen umrandeter, homogener Bereiche und/oder
- Farbinformationen, wenn vorhanden
- Farb-abhängige Segmentierung homogener Flächen
- Schattenerkennung
   und/oder
- Weniger sensitive Segmentierung, da große und deutlich erkennbare Objekte erwartet werden und/oder
- Entfernen von zu kleinen Objekten, also Objekten unter einer Mindestgröße.

In einem weiter entfernten Bereich können die folgenden Kriterien für eine Segmentierungsstrategie genutzt werden:
- Empfindlichere Segmentierung als im Nahbereich, um keine Objekte zu übersehen und/oder
- Texturinformationen.

Die Segmentierungsstrategie und die vorverarbeiteten Bilddaten mit den relevanten Pixeln werden an ein Segmentierungsmodul 7 übergeben, welches unter Verwendung der Segmentierungsstrategie und ausgehend von dem Objektpixel ein zugehöriges Objekt aus den relevanten Pixeln segmentiert.

Das segmentierte Objekt wird bei einer einfachen Ausführungsform über eine Ausgabe 8 zur weiteren Verarbeitung ausgegeben.

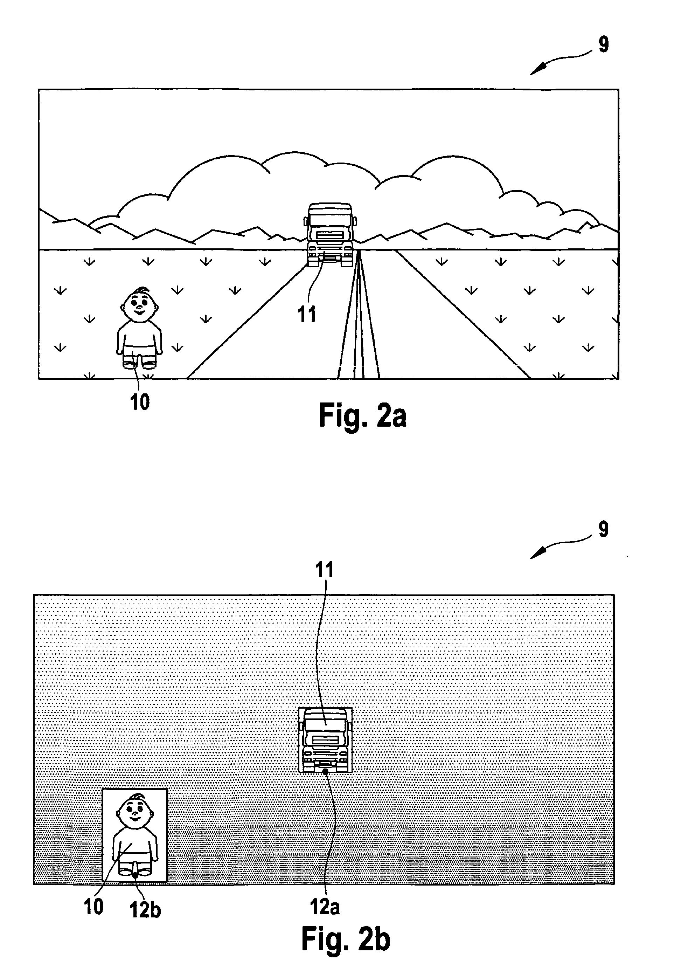

Die Figuren 2a bis d illustrieren nochmals die soeben beschriebenen Schritte eines Segmentierungsverfahrens, welches ein Ausführungsbeispiel der Erfindung bildet. In der Figur 2a ist stark schematisiert ein Bild 9 eines in diesem Fall realen Überwachungsbereichs in Form einer Straße gezeigt, in dem sich als bewegte Objekte ein Kind 10 und ein Lastwagen 11 befinden.

Bei der Vorverarbeitung mit dem Suchmodul 4 wird das Bild 9 der Figur 2a zunächst mit einem Szenenreferenzbild, welches den Überwachungsbereich als statischen Hintergrund zeigt, verglichen. Die Gemeinsamkeiten des Bilds 9 und des Szenenreferenzbilds werden als statische Anteile in dem Bild 9 eliminiert, wobei die Straße, der Horizont, etc. ausgefiltert wird. Die Figur 2b zeigt das Ergebnis dieser Vorverarbeitung, wobei nach Eliminierung der statischen Bereiche nur die Bildbereiche des Kindes 10 und des Lastwagen 11 verbleiben.

Diese Bereiche bilden Regionen mit für die weitere Verarbeitung relevanten Pixeln.

In dem Schätzmodul 5 wird nachfolgend für eines der relevanten Pixel aus den Bereichen der bewegten Objekte, also in diesem Beispiel des Kindes 10 und des Lastwagens 11, als Objektpixel die tatsächliche Distanz in dem Überwachungsbereich abgeschätzt. Insbesondere werden Fußpunkte 12a, b der bewegten Objekte als Objektpixel verwendet. Die Fußpunkte 12 a, b können beispielsweise durch sogenannte "bounding boxes" - also umschreibende Rechtecke - von Ansammlungen von relevanten Pixeln gefunden werden. Alternativ hierzu können die Fußpunkte 12a, b auch durch Absuchen der zunächst untersten Zeilen des vorverarbeiteten Bildes 9 aufgefunden werden.

Bei der Abschätzung der Distanz wird - wie in der Figur 2b durch die Grauschattierung angedeutet - ausgenutzt, dass von der zugehörigen Überwachungskamera 3 weit entfernte Objekte im Bild 9 ihren Fußpunkt 12a weiter oben im Bild 9 haben als Objekte näher an der Kamera 3 mit dem Fußpunkt 12b. Alternativ zu dieser Vorgehensweise kann die Distanz der Objektpixel auch über eine Kalibrierung der Überwachungskameras 3 oder andere Verfahren abgeschätzt werden.

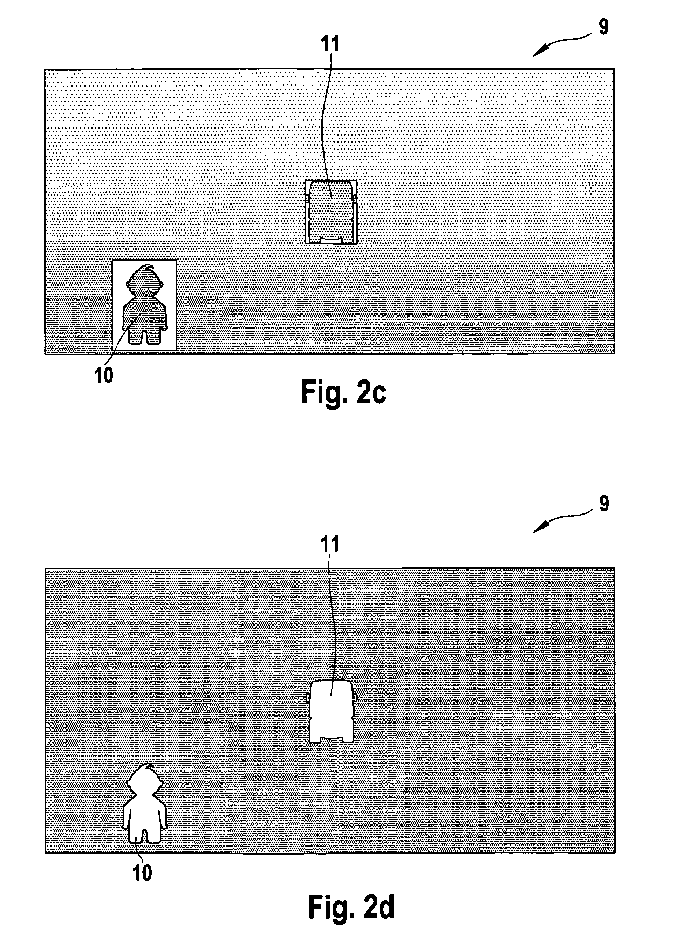

Die Figur 2c illustriert, wie ausgehend von Fußpunkten 12 a,b weitere relevante Pixel des jeweiligen Objektes 10, 11 zu einer gemeinsamen Pixelwolke vereinigt werden. Nachdem anzunehmen ist, dass alle Pixel des Objekts 10 bzw. 11 die gleiche Distanz in dem Überwachungsbereich wie der zugehörige Objektpixel aufweist, werden allen Pixeln der gemeinsamen Pixelwolke die gleiche Distanz zugeordnet. Anders ausgedrückt wird die Distanzinformation ausgehend vom Fußpunkt 12 a,b am Objekt 10, 11 entlang transportiert.

In der Figur 2d ist schematisch dargestellt, wie durch das Segmentierungsmodul 7 die Pixelwolken zu Objekten bzw. Objektmasken segmentiert werden, wobei basierend auf der Distanzinformation eine optimale oder optimierte Segmentierungsstrategie von dem Strategiemodel 6 berechnet und übergeben wird.

In einer Ergänzung ist es möglich, dass nach einer ersten Segmentierung durch das Segmentierungsmodul 7 in Abhängigkeit zum Beispiel von der Größe und anderen Eigenschaften der Objektes 10, 11 die geschätzte Distanz überprüft und gegebenenfalls korrigiert wird, wobei nach einer Korrektur die Segmentierung in dem Segmentierungsmodul 7 nochmals und gegebenenfalls mit einer an die neue Distanz angepasste Segmentierungsstrategie durchgeführt wird, um die Segmentierung zu verfeinern. Mit dieser Vorgehensweise können falsche Distanzschätzungen, zum Beispiel durch Objekte auf einer Leiter, springende - fliegende Objekte oder ähnliches nachkorrigiert und die Segmentierung verfeinert werden. Diese Iteration ist in der Figur 1 durch einen gestrichelten Pfeil dargestellt.

## Patentansprüche

1. Vorrichtung (2) zur Segmentierung eines Objekts (10, 11) in einem Bild (9), wobei in dem Bild (9) ein Überwachungsbereich mit einem oder mehreren Objekten (10, 11) dargestellt ist,
mit einem Schätzmodul (5), welches ausgebildet ist, für ein Objektpixel (12a,b) des Objekts (10, 11) in dem Bild (9) eine reale Distanz in dem Überwachungsbereich abzuschätzen,
wobei die Distanz auf die Position einer das Bild aufnehmenden Überwachungskamera (3) bezogen ist,
mit einem Segmentierungsmodul (7), welches ausgebildet ist, gemäß einer Segmentierungsstrategie das Objekt (10,11) zu segmentieren, welches das Objektpixel (12a,b) umfasst, und mit
einem Strategiemodul (6), welches programmtechnisch und/oder schaltungstechnisch ausgebildet ist, die Segmentierungsstrategie für das Objekt (10,11) in Abhängigkeit zu der geschätzten Distanz anzupassen.

2. Vorrichtung (2) nach Anspruch 1, **dadurch gekennzeichnet, dass** das Strategiemodul (6) mindestens zwei unterschiedliche Segmentierungsstrategien aufweist.

3. Vorrichtung (2) nach Anspruch 1 oder 2, **dadurch gekennzeichnet, dass** eine erste Segmentierungsstrategie auf Nahobjekte (10) und eine zweite Segmentierungsstrategie auf Fernobjekte (11) angepasst ist.

4. Vorrichtung (2) nach Anspruch 3, **dadurch gekennzeichnet, dass** die Segmentierungsstrategien sich in bezug auf die Bewertung einer beliebigen Auswahl der nachfolgenden Merkmale unterscheiden:
- Größe der Objekte und/oder Teilbereiche davon
- Farbe der Objekte und/oder Teilbereiche davon
- Texturierung der Objekte und/oder Teilbereiche davon

5. Vorrichtung (2) nach einem der vorhergehenden Ansprüche, **dadurch gekennzeichnet, dass** sich die Segmentierungsstrategien durch eine Schattenerkennung unterscheiden.

6. Vorrichtung (2) nach einem der vorhergehenden Ansprüche, **dadurch gekennzeichnet, dass** das Schätzmodul (5) die Distanz in Abhängigkeit der Position des Objektpixels (12 a,b) in dem Bild (9) abschätzt.

7. Vorrichtung (2) nach einem der vorhergehenden Ansprüche, **dadurch gekennzeichnet, dass** das Objektpixel (12a,b) ein Fußpixel des Objekts (10, 11) ist.

8. Vorrichtung (2) nach einem der vorhergehenden Ansprüche, **dadurch gekennzeichnet, dass** das Segmentierungsmodul (7) ausgebildet ist, ausgehend von dem Objektpixel (12a,b) benachbarte, insbesondere unmittelbar benachbarte Pixel, auf die Zugehörigkeit zu dem gleichen Objekt auf Basis der Segmentierungsstrategie zu überprüfen.

9. Vorrichtung (2) nach einem der vorhergehenden Ansprüche, **dadurch gekennzeichnet, dass** Segmentierungsmodul (7) zu einer Überprüfung des segmentierten Objekts in Bezug auf die Distanz ausgebildet ist.

10. Videoüberwachungssystem (1) mit einem oder mehreren Überwachungskameras (3), **gekennzeichnet durch** eine Vorrichtung nach einem der vorhergehenden Ansprüche.

11. Verfahren zur Segmentierung eines Objekts (10, 11) in einem Bild (9),
wobei in dem Bild (9) ein Überwachungsbereich mit einem oder mehreren Objekten dargestellt ist,
wobei für ein Objektpixel (12a, b) des Objeckts (10, 11) in dem Bild (9) eine reale Distanz in dem Überwachungsbereich abgeschätzt wird,
wobei die Distanz auf die Position einer das Bild aufnehmenden Überwachungskamera (3) bezogen ist,
wobei abhängig von der geschätzten Distanz eine Segmentierungsstrategie ausgewählt und/oder angepasst wird, und
wobei das Objekt (10, 11), welches das Objektpixel (12a, b) umfasst, gemäß der Segmentierungsstrategie segmentiert wird.

12. Computerprogramm mit Programm-Code Mitteln, um alle Schritte des Verfahrens nach Anspruch 11 durchzuführen, wenn das Programm auf einem Computer und/oder auf einer Vorrichtung (2) nach einem der Ansprüche 1-9 und/oder auf einem Videoüberwachungssystem (1) nach Anspruch 10 ausgeführt wird.

## Claims

1. Apparatus (2) for segmenting an object (10, 11) in an image (9), a surveillance area with one or more objects (10, 11) being represented in the image (9), having an estimating module (5) which is designed to estimate for an object pixel (12a, b) of the object (10, 11) in the image (9) a real distance in the surveillance area, the distance being referred to the position of a surveillance camera (3) recording the image, having a segmentation module (7) which is designed to use a segmentation strategy to segment the object (10, 11) which comprises the object pixel (12a, b), and having a strategy module (6) which is designed in terms of programming and/or circuitry to adapt the segmentation strategy for the object (10, 11) as a function of the estimated distance.

2. Apparatus (2) according to Claim 1, **characterized in that** the strategy module (6) has at least two different segmentation strategies.

3. Apparatus (2) according to Claim 1 or 2, **characterized in that** a first segmentation strategy is adapted to nearby objects (10), and a second segmentation strategy is adapted to distant objects (11).

4. Apparatus (2) according to Claim 3, **characterized in that** the segmentation strategies differ with reference to the evaluation of any desired selection of the following features:
- size of the objects and/or subregions thereof,
- colour of the objects and/or subregions thereof,
- texturing of the objects and/or subregions thereof.

5. Apparatus (2) according to one of the preceding claims, **characterized in that** the segmentation strategies differ in terms of shadow detection.

6. Apparatus (2) according to one of the preceding claims, **characterized in that** the estimating module (5) estimates the distance as a function of the position of the object pixel (12a, b) in the image (9).

7. Apparatus (2) according to one of the preceding claims, **characterized in that** the object pixel (12a, b) is a foot pixel of the object (10, 11).

8. Apparatus (2) according to one of the preceding claims, **characterized in that** the segmentation module (7) is designed to start from the object pixel (12a, b) in order to check whether adjacent, in particular directly adjacent, pixels belong to the same object on the basis of the segmentation strategy.

9. Apparatus (2) according to one of the preceding claims, **characterized in that** the segmentation module (7) is designed to check the segmented object with reference to the distance.

10. Video surveillance system (1) having one or more surveillance cameras (3), **characterized by** an apparatus according to one of the preceding claims.

11. Method for segmenting an object (10, 11) in an image (9), in which a surveillance area with one or more objects is displayed in the image (9), in which a real distance in the surveillance area is estimated for an object pixel (12a, b) of the object (10, 11) in the image (9), in which the distance is referred to the position of a surveillance camera (3) recording the image, in which a segmentation strategy is selected and/or adapted as a function of the estimated distance, and in which the object (10, 11), which comprises the object pixel (12a, b), is segmented in accordance with the segmentation strategy.

12. Computer program having program code means for carrying out all the steps of the method according to Claim 11 when the program is executed on a computer and/or on an apparatus (2) according to one of Claims 1-9, and/or on a video surveillance system (1) according to Claim 10.

## Revendications

1. Appareil (2) pour la segmentation d'un objet (10, 11) dans une image (9), un domaine de surveillance avec un ou plusieurs objets (10, 11) étant représenté dans l'image (9),
avec un module d'évaluation (5) développé pour évaluer une distance réelle d'un pixel d'objet (12a, b) de l'objet (10, 11) dans l'image (9) dans le domaine de surveillance,
la distance se référant à la position d'une caméra de surveillance (3) enregistrant l'image,
avec un module de segmentation (7) développé pour segmenter l'objet (10, 11) comportant le pixel d'objet (12a, b) selon une stratégie de segmentation, et avec
un module de stratégie (6) développé en technique de programmation et/ou en technique câblée pour adapter la stratégie de segmentation pour l'objet (10, 11) en fonction de la distance évaluée.

2. Appareil (2) selon la revendication 1, **caractérisé en ce que** le module de stratégie (6) comporte au moins deux stratégies de segmentation différentes.

3. Appareil (2) selon la revendication 1 ou 2, **caractérisé en ce qu'**une première stratégie de segmentation est adaptée à des objets proches (10) et une deuxième stratégie de segmentation à des objets éloignés (11).

4. Appareil (2) selon la revendication 3, **caractérisé en ce que** les stratégies de segmentation se distinguent en relation avec l'évaluation d'un choix quelconque des caractéristiques suivantes :
- taille des objets et/ou de domaines partiels en faisant partie
- couleur des objets et/ou de domaines partiels en faisant partie
- texture des objets et/ou de domaines partiels en faisant partie.

5. Appareil (2) selon une des revendications précédentes, **caractérisé en ce que** la stratégie de segmentation se distingue par une reconnaissance d'une ombre.

6. Appareil (2) selon une des revendications précédentes, **caractérisé en ce que** le module d'évaluation (5) évalue la distance en fonction de la position du pixel d'objet (12a, b) dans l'image (9).

7. Appareil (2) selon une des revendications précédentes, **caractérisé en ce que** le pixel d'objet (12a, b) est un pixel du pied de l'objet (10, 11).

8. Appareil (2) selon une des revendications précédentes, **caractérisé en ce que** le module de segmentation (7) est développé à partir des pixels voisins, notamment des pixels immédiatement voisins du pixel d'objet (12a, b), pour vérifier l'appartenance au même objet sur la base de la stratégie de segmentation.

9. Appareil (2) selon une des revendications précédentes, **caractérisé en ce que** le module de segmentation (7) est développé pour une vérification de l'objet segmenté en fonction de la distance.

10. Système de vidéosurveillance (1) avec une ou plusieurs caméras de surveillance (3), **caractérisé par** un appareil selon une des revendications précédentes.

11. Procédé pour la segmentation d'un objet (10, 11) dans une image (9), un domaine de surveillance avec un ou plusieurs objets étant représenté dans l'image (9),
une distance réelle d'un pixel d'objet (12a, b) de l'objet (10, 11) dans l'image (9) étant évaluée dans le domaine de surveillance,
la distance se référant à la position d'une caméra de surveillance (3) enregistrant l'image,
une stratégie de segmentation étant choisie et/ou adaptée en fonction de la distance évaluée, et
l'objet (10, 11) comportant le pixel d'objet (12a, b), étant segmenté selon la stratégie de segmentation.

12. Programme d'ordinateur avec des moyens de code de programme pour exécuter toutes les étapes du procédé selon la revendication 11, lorsque le programme est exécuté sur un ordinateur et/ou sur un appareil (2) selon une des revendications 1 - 9 et/ou sur un système de vidéosurveillance (1) selon la revendication 10.
